## Europäisches Patentamt
## European Patent Office
## Office européen des brevets

(19)

(11) Numéro de publication: **0 059 677**
**A1**

(12)

# DEMANDE DE BREVET EUROPEEN

(21) Numéro de dépôt: **82440007.1**

(22) Date de dépôt: **25.02.82**

(51) Int. Cl.³: **A 01 K 79/00**
**A 01 K 73/06**

(30) Priorité: **26.02.81 FR 8103838**

(43) Date de publication de la demande:
**08.09.82 Bulletin 82/36**

(84) Etats contractants désignés:
**BE DE GB IT NL SE**

(71) Demandeur: **ATELIERS ET CHANTIERS DE LA MANCHE**
**29, rue de Marignan**
**F-75 008 Paris(FR)**

(71) Demandeur: **GROUPEMENT D'ETUDES ET DE**
**RECHERCHES NAVALES (G.E.R.N.)**
**Anse du Lin**
**F- 29 183 Concarneau(FR)**

(72) Inventeur: **de la Roche Kerandraon, Olivier**
**18, rue de Gravelle**
**F-75012 Paris(FR)**

(72) Inventeur: **Regnier, Paul**
**55, avenue Gambetta**
**F-76200 Dieppe(FR)**

(74) Mandataire: **Poupon, Michel**
**Cabinet Arbousse Bastide 20, rue de Copenhague**
**F-67000 Strasbourg(FR)**

(54) **Dispositif de pêche à la palangre, et poulie et mécanisme d'entraînement s'y rapportant.**

(57) La palangre comprend une ligne principale (3) refermée en boucle, à laquelle sont fixées des lignes porte-hameçon (4). Le dispositif comprend en outre des moyens portés par un bateau (2) pour assurer le défilement de la palangre.

Le dispositif comprend en outre un engin sous-marin (28) destiné à être tiré par le bateau (2) par l'intermédiaire de la palangre. Cet engin comprend un déflecteur (31) pour freiner son avance dans l'eau, et une poulie de renvoi (9) pour la palangre.

Utilisation pour la pêche intensive à des profondeurs variées.

Fig. 1

EP 0 059 677 A1

- 1 -

DISPOSITIF DE PECHE A LA PALANGRE, ET POULIE ET MECA-
NISME D ENTRAINEMENT S'Y RAPPORTANT.

L'invention concerne un dispositif de pêche à la palangre.

L'invention concerne également une poulie ainsi qu'un mécanisme d'entraînement destinés notamment, à équiper ce dispositif de pêche.

On appelle palangre un dispositif comprenant une ligne principale, à laquelle sont fixées de façon répartie, un certain nombre de lignes individuelles munies chacune à leur extrémité d'un hameçon.

La pêche à la palangre traditionnelle consiste à immerger une telle ligne sur une grande longueur, puis ensuite à la ressortir de l'eau en collectant le poisson capturé.

On connaît un dispositif de pêche comprenant une palangre dont la ligne principale est refermée sur elle-même -ou palangre en boucle-. Le dispositif comprend en outre un chariot roulant au fond de la mer sensiblement à l'aplomb du bateau de pêche. Ce chariot porte des montants émergeant à la surface de la mer et par lesquels il est poussé par le bateau. La palangre en boucle est entraînée à la manière d'une courroie entre le bateau et le chariot sous-marin.

Ce dispositif permet de procéder à

-2-

la pêche à la palangre en continu. Cependant, il présente de nombreux inconvénients. Ainsi, le chariot est un dispositif complexe et lourd sujet à de nombreuses avaries. La pêche au moyen de ce dispositif ne peut être effectuée qu'en des emplacements où les profondeurs sont réduites. En outre, la longueur développée de la palangre est très faible, de sorte que le temps d'immersion des hameçons à chaque cycle est réduit, et, à un instant donné, la pêche n'intéresse qu'une très faible distance du fond marin. Or, les avantages que l'on recherche lorsqu'on procède à la pêche à la palangre, sont de pêcher avec un grand nombre d'hameçons simultanément et sur une distance pouvant atteindre plusieurs kilomètres.

Le but de l'invention est de remédier à ces inconvénients en réalisant un dispositif de pêche à la palangre en continu qui soit simple, fiable, et qui permette l'immersion prolongée, simultanée d'un grand nombre d'hameçons répartis sur une distance de mer appréciable.

L'invention vise ainsi un dispositif de pêche à la palangre en continu, cette palangre comprenant une ligne principale à laquelle sont fixées de façon répartie, des lignes porte-hameçons, le dispositif comprenant en outre des moyens portés par un bateau destinés à assurer le défilement de la palangre.

Suivant l'invention, ce dispositif est caractérisé en ce qu'il comprend en outre un engin sous-marin destiné à être traîné par le bateau par l'intermédiaire de la palangre, cet engin comprenant des moyens pour freiner son avance dans l'eau. Dans le cas de la pêche à la palangre en boucle, le dispositif comportera en outre au moins une poulie de renvoi pour la palangre.

Ainsi, la longueur développée de la palangre peut être aussi grande que l'on veut et, grâce à l'invention, la pêche à la palangre en boucle offre les mêmes avantages que la pêche à la palangre traditionnelle en ce qui concerne la durée d'immersion des hameçons et le nombre d'hameçons immergés. L'engin sous-marin étant indépendant du bateau, la pêche peut s'effectuer dans toutes les profondeurs usuelles dans le cadre de la pêche à la palangre.

Un des problèmes importants dans le cadre de la pêche à la palangre, et surtout de la palangre en boucle où on recherche avant tout l'automatisation, est de parvenir à faire passer la palangre sur des poulies de guidage ou d'entraînement sans que les lignes individuelles et surtout le poisson capturé par ces lignes soit endommagé par les poulies.

Ainsi, selon un autre objet de l'invention, la poulie pour convoyeur par suspension, destinée à assurer notamment le guidage et éventuellement l'entraînement d'une palangre faisant partie d'un dispositif du genre précité, est caractérisée en ce qu'elle comprend deux demi-poulies séparées par un interstice perpendiculaire à l'axe de cette poulie, cet interstice étant d'épaisseur inférieure au diamètre du câble de convoyage, et au moins égal au diamètre des fils de suspensions. En service, le câble est supporté par la gorge définie par les deux demi-poulies, tandis que les fils de suspension, tels que les lignes porte-hameçon dans le cas d'une palangre, passent entre les deux demi-poulies, de sorte que l'objet suspendu aux fils tel que le poisson ayant mordu à l'hameçon passe au-dessous de la poulie sans être endommagé par cette dernière.

Selon un troisième objet de l'invention, le dispositif d'entraînement pour convoyeur par suspension, destiné notamment à entraîner la palangre

-4-

du dispositif de pêche précité, est caractérisé en ce qu'il comprend deux tambours d'axes sensiblement parallèles, ces tambours étant garnis au moins à leur pourtour d'une bande de roulement en élastomère, l'un de ces tambours étant attelés à un moteur, les deux tambours étant destinés à pincer entre leurs bandes de roulement le câble du convoyeur, et à entraîner ce dernier par l'adhérence en résultant.

Les tambours pincent le câble et la partie des fils de suspension adjacente au câble. Par contre, l'extrémité libre des fils de suspension, auquel est accroché l'objet transporté tel que le poisson pêché, passe au-dessous des tambours.

D'autres particularités et avantages de l'invention ressortiront encore de la description ci-après.

Aux dessins annexés, donnés à titre d'exemples non limitatifs :

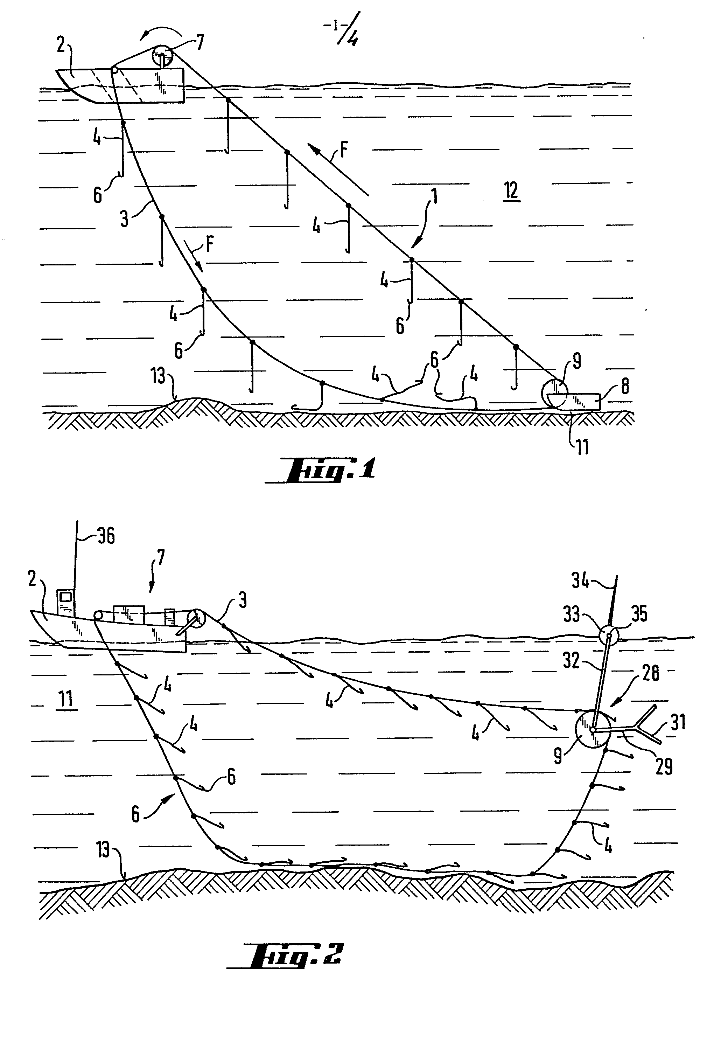

. les figures 1 à 4 sont des vues schématiques en élévation latérale de quatres modes de réalisation de l'invention ;

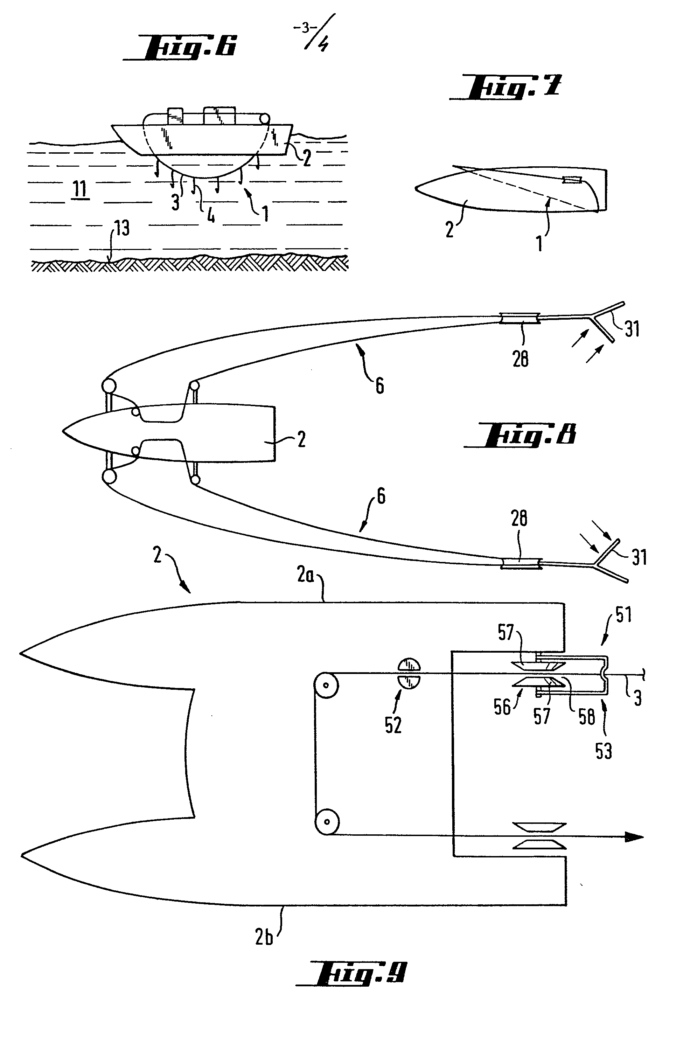

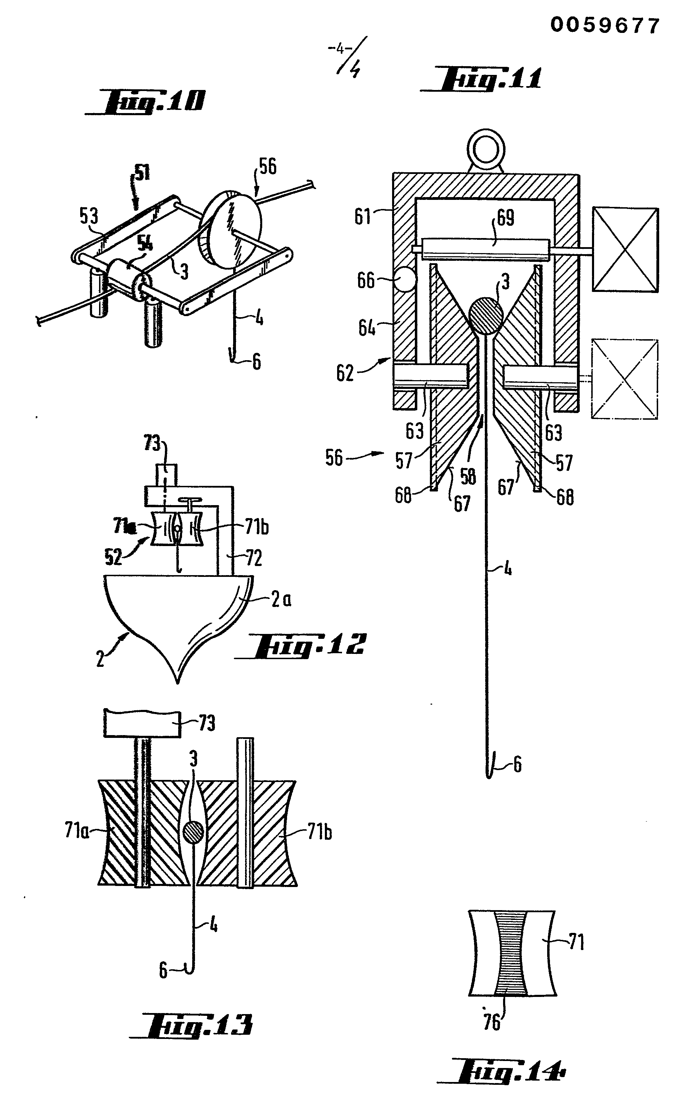

. les figures 5 et 6 sont des vues schématiques en élévation latérale montrant deux utilisations du dispositif de la figure 4 en vue de la pêche au thon ;

. la figure 7 est une vue en plan du dispositif de la figure 6 ;

. la figure 8 est une vue en plan d'une autre utilisation du dispositif conforme à l'invention ;

. la figure 9 est une vue en plan du dispositif conforme à l'invention, monté sur un bateau du type catamaran ;

. la figure 10 est une vue en perspective des moyens de guidage de la palangre ;

0059677

-5-

. la figure 11 est une vue de face
en bout d'une poulie d'entraînement de la palangre ;
. la figure 12 est une vue de face,
schématique d'un bateau équipé d'un autre dispositif
d'entraînement de la palangre ;
. la figure 13 est une vue analogue
à la figure 12, mais plus détaillée, les tambours
étant desserrés ; et
. la figure 14 est une vue latérale
de l'un des tambours.

Dans l'exemple de réalisation de la
figure 1, le dispositif de pêche 1 conforme à l'invention est en service sur un bateau de pêche.

Le dispositif de pêche 1 comprend
une palangre formée d'une ligne principale 3 à laquelle sont fixées de façon répartie, par exemple
tous les six mètres, des lignes porte-hameçon 4 par
l'une de leurs extrémités. L'autre extrémité des lignes porte-hameçon 4 porte un hameçon 6. De préférence, plusieurs tailles d'hameçons 6 sont réparties le
long de la ligne 3.

La palangre ainsi constituée est refermée sur elle-même de façon à constituer une palangre en boucle. Le bateau 2 porte des moyens 7 tels
qu'une poulie motrice pour guider et entraîner la palangre dans un mouvement analogue à celui d'une courroie. De tels moyens seront décrits en détail plus
loin.

Conformément à l'invention, le dispositif 1 comprend en outre un engin sous-marin 8
portant de façon rotative une poulie 9 de renvoi de
la palangre. En service, celle-ci est donc montée à
la manière d'une courroie sur les moyens 7 et la poulie de renvoi 9.

L'engin 8 est destiné à être tiré

-6-

par le bateau 2 par l'intermédiaire de la palangre.

L'engin sous-marin 8 comprend des moyens 11 pour freiner son avance dans l'eau 12. Dans l'exemple représenté, l'engin 8 est un traîneau qui repose sur le fond 13 de la mer, et les moyens pour freiner son avance dans l'eau résident dans son fond 11 qui frotte contre le fond 13 de la mer lorsque le bateau 2 le tire.

Le sens de rotation de la palangre autour des poulies 7 et 9 représenté par les flèches F (figure 1), est tel que la partie de la boucle qui descend du bateau 2 vers le fond 13 est la partie antérieure de celle-ci, c'est-à-dire celle qui est la plus proche de l'avant du bateau 2.

La poulie 9 est associée à des moyens de freinage qui ne permettent sa rotation que moyennant la production d'un certain effort pour vaincre leur résistance passive. Ainsi, la partie montante de la boucle de la palangre est tendue, entre les poulies 9 et 7. Par contre, la partie descendante de la boucle est lâche et repose en partie sur le fond de l'eau 13. La vitesse assurée par la poulie 7 pour le défilement de la palangre est telle que la partie de la palangre reposant au fond de l' eau est immobile sur ce fond.

En pratique, ce résultat est obtenu si la vitesse linéaire de la périphérie de la poulie 7 par rapport à son axe est égale à la vitesse du bateau.

De préférence, la ligne principale 3 est composée de plusieurs tronçons attachés les uns aux autres permettant de faire varier sa longueur. On peut par exemple prévoir que l'engin 8 évolue trois kilomètres derrière le bateau 2. Si celui-ci avance à 3 km/h, chaque ligne porte-hameçon 4 demeure

-7-

à peu près une heure immobile sur le fond 13.

Des leurres lumineux ou sonores peuvent être fixés aux lignes 3,4 ou aux hameçons pour attirer les poissons et autres animaux.

Le dispositif qui vient d'être décrit fonctionne de la façon suivante :

Lorsque le bateau 2 avance et que les moyens 7 entraînent la palangre, les hameçons 6 qui quittent le bateau 2 tombent lentement jusqu'au fond 13. Déjà à ce stade, ils peuvent attirer et capturer certains poissons. Ensuite, les hameçons restent immobiles au fond 13 pendant un certain temps. A ce stade, ils peuvent attirer d'autres types de poissons, mais aussi des crustacés. Ensuite, les hameçons, ayant atteint l'engin 8, repartent brusquement vers le bateau 2 à une vitesse d'environ 6 kilomètres/heure. Ce départ brusque des appâts, puis leur avance constante vers le bateau 2 attire fortement les poissons, surtout s'il a également été prévu des leurres.

A l'arrivée sur le bateau 2, le poisson capturé est libéré des hameçons 6 et envoyé vers un stockage, puis les hameçons 6 sont remis en condition (pose d'un nouvel appât, etc.) et le cycle de pêche recommence. .

Le dispositif décrit ci-dessus est particulièrement avantageux puisque chaque partie de la palangre vise des catégories différentes d'animaux marins. On réalise ainsi simultanément une pêche à hameçon quasi fixe lors de la descente des hameçons, une pêche au fond en vue de capturer des mollusques et des poissons de fond, et une pêche à la traîne dans la phase de remontée des hameçons. A l'examen des animaux capturés en continu, le personnel du bateau 2 peut apprécier quelles sont les espèces prédominantes

-8-

dans un secteur donné, et appeler par radio des bateaux spécialement équipés pour la pêche de ces espèces. Enfin, le dispositif peut être facilement adapté à un bateau de type courant, même de taille réduite.

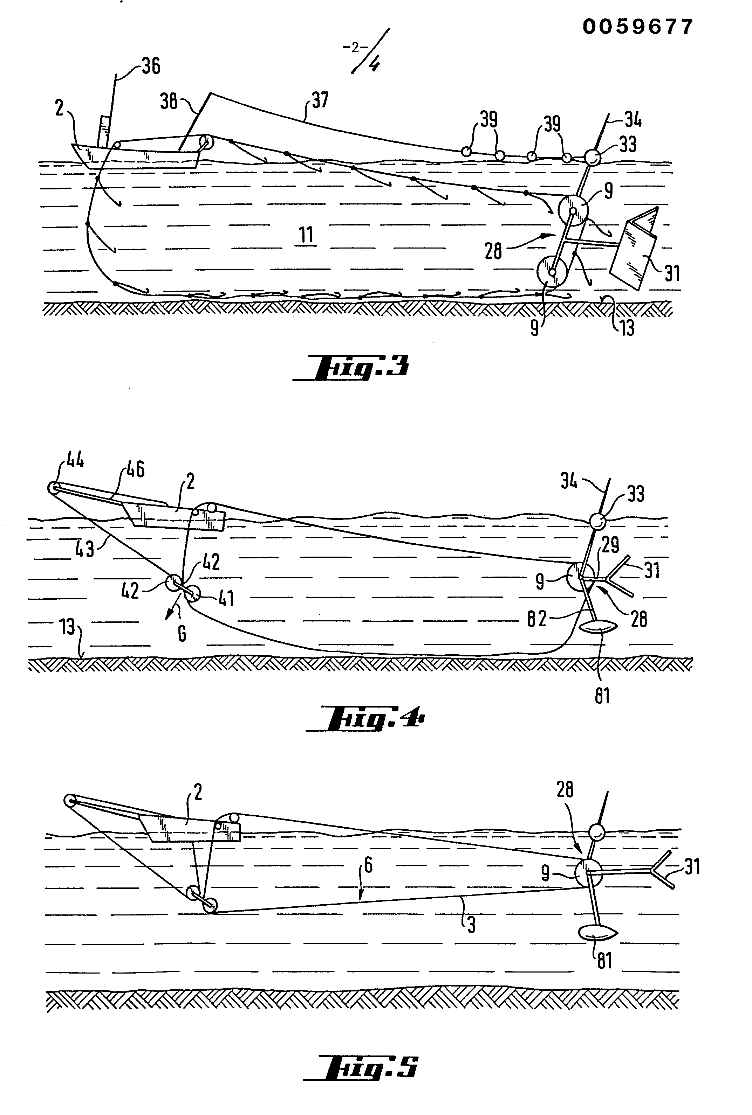

L'exemple de la figure 2 est analogue à celui de la figure 1, mais on a cherché à éviter le recours à un engin frottant sur le fond de la mer.

Ainsi, le traîneau 8 est remplacé par un engin 28 portant comme le traîneau 8 une poulie de renvoi 9, mais destiné à flotter entre deux eaux.

L'engin 28 comprend une monture 29 pour la poulie 9. La monture 29 est sensiblement horizontale et dirigée à l'opposé du bateau 2 et porte un déflecteur 31 destiné à freiner l'avance de l'engin 28 dans l'eau. Le déflecteur 31, qui est conique, est fixé à la monture 29 par son sommet.

Les moyens de freinage de la poulie 9 comprennent une roue à aubes (non représentée) entraînée en rotation par la poulie 9 et assurant le freinage hydrodynamique de la poulie 9.

L'engin 28 est relié par un câble 32 à un flotteur de surface 33 sur lequel est monté un treuil 35 pour le câble 32. Le flotteur porte en outre une antenne 34 de radio-commande du treuil 35, et qui coopère avec une antenne 36 installée sur le bateau 2 pour l'émission vers l'antenne 34.

De préférence, l'engin 28 porte également des moyens pour régler l'orientation latérale du déflecteur 31, de façon à permettre éventuellement une certaine dérive de l'engin 28, autrement dit lui permettre de s'écarter du sillage du bateau 2. Ces moyens d'orientation du déflecteur 31 peuvent égale-

-9-

ment être commandés par radio.

Le fonctionnement du dispositif est analogue à celui de la figure 1 en ce qui concerne le défilement de la palangre.

Selon que l'on constate que l'on capture plus ou moins d'espèces de surface ou d'espèces de fond, on peut commander par radio le treuil 35 de façon que la partie de palangre allant de l'engin 28 au bateau 2 évolue à la profondeur la plus poissonneuse.

Si l'on donne au déflecteur 31 une inclinaison latérale par rapport au bateau 2, la pêche intéresse alors une large bande de mer au lieu d'être limitée à une bande étroite dans le sillage du navire.

L'exemple de la figure 3 est analogue à celui de la figure 2, excepté que l'engin 28 porte deux poulies de renvoi 9, montées en série. La distance des poulies 9 de renvoi est réglable, les moyens de réglage comprenant éventuellement un moteur radiocommandé.

Par ailleurs, le déflecteur 31 est réalisé sous la forme d'un dièdre dont les génératrices sont, en service, sensiblement verticales. Ce déflecteur 31 peut également être orientable latéralement.

En outre, le flotteur 33 est relié par un câble 37 au sommet d'un mât 38 porté par le bateau 2. Le câble 37 porte de loin en loin des boules de signalisation 39.

Le dispositif de la figure 3 permet de pêcher tout près de la surface au moyen de la partie de la palangre revenant vers le bateau 2 sans que la partie de la palangre qui doit reposer sur le fond 13 ne se soulève de façon trop précoce à l'arrivée de l'engin 28.

Le dispositif de la figure 4 comprend des moyens de guidage pour la palangre quand elle quitte le bateau 2. Ces moyens de guidage, qui comprennent deux poulies 41 d'axes parallèles et ayant une monture commune 42, sons suspendus au bateau 2 au moyen d'un filin 43. Celui-ci est engagé sur une poulie 44 montée en rotation à l'extrémité d'un beaupré 46. Ainsi, la longueur du filin 43 entre la poulie 44 et les poulies 41 est réglable depuis le bateau 2 en agissant sur l'extrémité du filin 43 qui y est ramenée.

La palangre est prisonnière entre les deux poulies 41 et la monture 42 qui exercent sur la palangre, du fait de leur poids, un effort de tension dirigé obliquement vers le bas et vers l'avant du bateau 2, selon la flèche G (figure 4).

Ces moyens de guidage 41, 42 évitent que la palangre ne flotte un certain temps entre deux eaux avant d'atteindre le fond 13. On est ainsi assuré que la palangre reste immobile au fond 13 pendant la durée voulue.

En outre, les moyens de freinage de la poulie 9 sont mécaniques. Pour équilibrer le couple de réaction engendré par ce freinage, l'engin 28 porte un lest 81 fixé à l'extrémité d'une quille 82 dirigée vers le fond 13 et légèrement vers l'arrière. Le lest 81 peut porter un détecteur de proximité assurant la servocommande du treuil 35 pour maintenir l'engin 28 à distance constante du fond 13.

Dans l'exemple de la figure 5, on utilise le dispositif de la figure 4 après avoir relâché le freinage en rotation de la poulie 9.

Ainsi, l'engin 28 se place à une distance telle du bateau 2 que toutes les parties de

0059677

-11-

la palangre sont tendues simultanément respectivement, entre le bateau 2 et les poulies 41, entre les
poulies 41 et l'engin 28, et entre l'engin 28 et le
bateau. Aucune partie de la palangre ne repose au
fond.

Cette utilisation du dispositif est
avantageuse dans le cadre de la pêche au thon.

Une autre utilisation avantageuse
est représentée aux figures 6 et 7. On sait que les
thons ont tendance à s'amasser sous les bateaux
arrêtés en pleine mer. En cet emplacement ils sont
généralement très difficiles à pêcher. L'invention
le permet cependant de façon simple, simplement en
laissant pendre en diagonale sous le bateau 2 une
boucle très raccourcie de la palangre.

Dans l'exemple de la figure 8, une
palangre du genre de celle des figures 2 ou 3 est
montée sur chacun des bords du bateau 2. On donne
aux déflecteurs 31 des orientations inclinées par
rapport au sillage du bateau de façon que les deux
palangres s'écartent l'une de l'autre, chacune de
son côté du sillage du bateau 2. Cette utilisation
est très appropriée pour les chalutiers évoluant
au-dessus de fonds 13 interdisant l'usage du chalut.

Dans l'exemple des figures 9 et
10, le dispositif est adapté à un bateau 2 du type
catamaran. Dans ce cas il est avantageux que l'entrée et le départ de la palangre s'effectuent par
l'arrière du bateau. La palangre arrive sur l'une
des coques 2a du catamaran 2 et repart de l'autre
coque 2b.

En arrivant sur la coque 2a, la
palangre traverse d'abord un dispositif de guidage
51 puis un dispositif d'entraînement 52.

-12-

Le dispositif de guidage 51 comprend un cavalier 53 dont la partie centrale porte un rouleau rotatif 54 par en dessous duquel s'appuie la ligne 3. Une poulie 56 est montée en rotation libre entre les bras du cavalier 51 et supporte la palangre 3.

La poulie 56 est d'un type approprié pour le guidage de la palangre, mais aussi, d'une façon plus générale, pour le guidage de tout câble servant au convoyage d'objets suspendus à des fils fixés à ce câble.

Selon une caractéristique importante, cette poulie 56 comprend deux demi-poulies 57 séparées par un interstice plan 58 perpendiculaire à l'axe de cette poulie 56. Cet interstice 58 est d'épaisseur inférieure au diamètre de la ligne principale 3 (qui constitue le câble de convoyage), mais supérieure à celle des lignes porte-hameçon 6 (qui constituent les fils de suspension).

Cette poulie 56 supporte la ligne 3 qui est trop grosse pour pénétrer dans l'interstice 58. Par contre, les lignes porte-hameçon 4 passent entre les deux demi-poulies 57 par l'interstice 58, de sorte que les hameçons et le poisson éventuellement capturé passent sous la poulie 56.

Toutes les poulies servant au guidage ou à l'entraînement de la palangre peuvent être réalisées ainsi en deux demi-poulies, ou même sous la forme d'un dispositif de guidage 51 complet notamment la ou les poulies de renvoi 9 portées par l'engin sous-marin 8 ou 28, et les poulies de guidage 41 des figures 4 à 6. Ainsi les hameçons et les animaux capturés ne risquent pas d'être écrasés entre la ligne principale 3 et la gorge d'une poulie.

On a représenté à la figure 11 un

-13-

dispositif d'entraînement de la palangre, ce dispositif utilisant une poulie 56 analogue à celle décrite plus haut.

La poulie 56 est portée par un cavalier 61 dirigé sensiblement vers le haut à partir de l'axe 62 de la poulie 56. L'axe 62 est bien entendu réalisé en deux demi-axes 63 séparés par l'interstice 58. L'un 64 des bras du cavalier 61 est articulé en 66 pour pouvoir être écarté de l'autre bras du cavalier et permettre la mise en place de la ligne 3 entre les demi-poulies 57 et le cavalier 61.

Les demi-poulies 57 coopèrent pour définir la gorge de la poulie 56. A cet effet elles présentent chacune une face périphérique tronconique 67, de conicité telle qu'en service la ligne 3 se coince suffisamment entre ces faces 67 pour que l'entraînement de la ligne 3 par la poulie 56 puisse avoir lieu.

Les demi-poulies 57 présentent chacune sur leur bord de plus grand diamètre une denture d'engrenage 68.

D'autre part, un pignon 69 à axe fixe monté en rotation par rapport au cavalier 61 autour d'un axe parallèle à l'axe 62 de la poulie, engrène simultanément avec les deux dentures 67 au-dessus de la ligne 3.

Selon une première variante, le pignon 69 est attelé à un moteur 71 destiné à assurer par l'intermédiaire du pignon 69 l'entraînement de la ligne 3. Selon une autre variante, le pignon 69 est monté fou dans le cavalier 61, et le moteur 71 est associé à l'un des demi-arbres 63. Dans ce cas, le pignon 69 sert à transmettre le mouvement moteur de l'une des demi-poulies 57 vers l'autre.

Le dispositif d'entraînement 52 de

0059677

-14-

la figure 9 est lui aussi applicable à tout type de convoyeur par suspension, et il est représenté plus en détail aux figures 12 à 14.

Il comprend deux tambours rotatifs 71a , 71b d'axes sensiblement parallèles portés par une potence 72 portée par la coque 2a. Les tambours 71a, 71b sont réalisés en élastomère. L'un de ces tambours 71a est attelé à un moteur 73.

L'autre tambour 71b est mobile entre une position d'entraînement (figure 12) dans laquelle sa bande de roulement est appliquée contre celle du premier tambour 71a, et une position dans laquelle il est écarté du premier tambour 71a (figure 13) pour permettre l'engagement de la ligne 3 entre les deux bandes de roulement.

De préférence, le profil de la bande de roulement de chaque tambour 71a ou 71b est incurvé de façon concave et symétrique par rapport au plan médian perpendiculaire à l'axe de ces tambours.

Ce dispositif d'entraînement fonctionne de la façon suivante :

Après avoir introduit la ligne 3 entre les deux tambours 71a , 71b, on met le second tambour 71b en position d'entraînement. La ligne 3 est ainsi pincée entre les deux bandes de roulement en élastomère.

On met en route le moteur 73 et celui-ci entraîne la ligne 3 par adhérence de cette dernière contre les tambours 71a, 71b.

Si une ligne porte-hameçon 4 se présente, sa partie supérieure est pincée entre les tambours 71a, 71b, mais l'hameçon 6 passe en dessous de ces tambours et demeure intact, de même que le poisson qu'il a éventuellement permis de capturer.

Comme les bandes de roulement sont

-15-

incurvées, la surface de contact entre les deux tambours 71a, 71b (en l'absence de la ligne 3) est celle représentée en 76 à la figure 14. Cette forme des bandes de roulement fait que la ligne 3 reste sensiblement au milieu des tambours et ne tend pas à en échapper, en particulier vers le bas.

Bien entendu, l'invention n'est pas limitée aux exemples qui viennent d'être décrits et de nombreux aménagements peuvent être apportés à ces exemples sans sortir du cadre de l'invention.

Ainsi par exemple par extension du principe de pêche à la palangre en boucle décrit ci-dessus, la boucle peut être formée en variante entre deux bateaux, ou encore entre un bateau central et deux bateaux se déplaçant parallèlement à celui-ci, qui peuvent être pilotés, radio-commandés avec un asservissement en vitesse. La zone balayée par les lignes est dans ce cas nettement plus importante.

Selon une variante de ce dispositif, la poulie de renvoi peut être conçue comme assujettie à un point fixe (barre) autour duquel tournera le bateau.

Il doit être compris que le but recherché est d'avoir constamment à l'eau le plus grand nombre d'hameçons possible.

Selon une autre variante avantageuse de mise en oeuvre, la palangre ne sera plus conformée en boucle mais selon un câble fonctionnant en va et vient respectivement d'un côté et de l'autre du bateau, autour d'une poulie de renvoi disposée sur le bateau.

Dans ce cas les deux extrémités libres du câble sont munies d'un moyen de freinage de l'avance dans l'eau tel que (11,31).

On entraine un déséquilibre dans la

-16-

ligne par tout moyen adéquat tel que :

- moteur et inverseur sur la poulie,

- poulie folle avec alors commande sur le frein écarteur,

- ancres flottantes sur chaque ligne (avec toujours une ancre de plus sur une ligne).

Ainsi quand l'une des branches de la palangre est en mouvement de descente dans la mer, l'autre branche remonte vers le bateau où le poisson est récupéré comme précédemment. On peut en outre par ce système faire varier les hauteurs sur une ligne par rapport à l'autre, ce qui permet une pêche selon des hauteurs différentielles et évite l'emmêlement des lignes.

Selon une autre variante et pour augmenter encore le rendement, les extrémités libres de la palangre pourront être relevées, grâce à un dispositif de relevage solidaire d'un flotteur, par enroulement jusqu'à pratiquement le niveau de la mer. Cet enroulage peut être automatisé.

De manière enfin à éviter tout risque d'accrochage des hameçons au niveau de la poulie de renvoi sur le bateau, celle-ci sera munie d'un disque cranté à sa périphérie, ce qui permettra la prise des avançons et leur écartement par rapport à l'axe incliné de la poulie.

Les avançons seront amenés sur ce disque par des rampes qui pourront être simples ou doubles.

REVENDICATIONS

1.        Dispositif de pêche à la palangre en continu, cette palangre comprenant une ligne principale (3) à laquelle sont fixées de façon répartie des lignes porte-hameçon (4), le dispositif comprenant en outre des moyens (51,52) portés par un bateau (2) pour assurer le défilement de la palangre (3,4), caractérisé en ce que ce dispositif comprend en outre un engin sous-marin (8,28) destiné à être tiré par le bateau (2) par l'intermédiaire de la palangre, cet engin (8,28) comprenant des moyens (11, 31) pour freiner son avance dans l'eau.

2.        Dispositif conforme à la revendication pour la pêche à la palangre en boucle, caractérisé en ce que l'engin (8,28) comporte en outre au moins une poulie de renvoi (9) pour la palangre (3,4).

3.        Dispositif conforme à la revendication 2, caractérisé en ce que le sens de défilement de la palangre (3,4) est tel que la partie descendante de la boucle est la partie antérieure de celle-ci.

4.        Dispositif conforme à la revendication 3, caractérisé en ce que la vitesse de défilement de la palangre (3,4) sur le bateau (2) est telle que la partie inférieure de la boucle formée par la palangre (3,4) repose immobile au fond de l'eau (13).

5.        Dispositif conforme à l'une quelconque des revendications 2 à 4, caractérisé en ce que la poulie de renvoi (9) est associée à des moyens de freinage en rotation.

6.        Dispositif conforme à l'une quelconque des revendications 2 à 5, caractérisé en ce que l'engin est un traineau (8) destiné à reposer au fond (13) de l'eau.

-18-

7.        Dispositif conforme à l'une quelconque des revendications 2 à 5, caractérisé en ce que l'engin (28) est relié par un câble (32) à un flotteur de surface (33), cet engin étant destiné à flotter entre deux eaux.

8.        Dispositif conforme à la revendication 7, caractérisé en ce que la longueur de ce câble (32) est réglable.

9.        Dispositif conforme à l'une des revendications 7 ou 8, caractérisé en ce que les moyens pour freiner l'avance de l'engin (28) dans l'eau comprennent un déflecteur (31) fixé à l'engin (28).

10.       Dispositif conforme à la revendication 9, caractérisé en ce que le déflecteur (31) est orientable.

11.       Dispositif conforme à l'une des revendications 7 à 10, caractérisé en ce que l'engin (28) comporte deux poulies de renvoi (9) montées en série et dont les axes sont à distance réglable.

12.       Dispositif conforme à l'une des revendications 7 à 11, caractérisé en ce que le flotteur (33) est relié au bateau (2) par un câble (37) portant des dispositifs de signalisation (39).

13.       Dispositif conforme à l'une des revendications 2 à 12, caractérisé en ce qu'il comprend des moyens de guidage aménagés au voisinage du bateau (2), destinés à guider la palangre (3,4) à sa sortie du bateau, ces moyens de guidage étant suspendus à un beaupré fixé à l'avant du bateau (2).

14.       Dispositif conforme à la revendication 12, caractérisé en ce que la suspension des moyens de guidage précités est de longueur réglable.

15.       Dispositif conforme à l'une des revendications 2 à 14, caractérisé en ce que les moyens destinés à assurer le défilement de la palangre (3,4)

0059677

-19-

sur le bateau (2) sont agencés pour que l'entrée et la sortie de la palangre (3,4) s'effectuent à l'arrière du bateau (2).

16.        Poulie pour convoyeur par suspension destinée à assurer notamment le guidage et éventuellement l'entraînement d'un dispositif de pêche à la palangre conforme à l'une des revendications 1 à 15, caractérisée en ce qu'elle comprend deux demi-poulies (57) séparées par un interstice (58) perpendiculaire à l'axe de cette poulie (56), l'interstice (58) étant d'épaisseur inférieure au diamètre du câble de convoyage (3), et au moins égale au diamètre des fils de suspension (4).

17.        Poulie conforme à la revendication 16, caractérisée en ce que les demi-poulies (57) sont portées par un cavalier (61) dont une branche (64) portant l'une des demi-poulies (57) est articulée entre une position de service verrouillée, et une position dans laquelle la demi-poulie (57) en question est écartée de l'autre pour permettre l'engagement du câble (3) sur la poulie (56).

18.        Poulie motrice conforme à l'une quelconque des revendications 16 ou 17, caractérisée en ce que les bords des demi-poulies (57) sont dentés, et en ce qu'un pignon à axe fixe engrène avec ces deux bords dentés.

19.        Poulie motrice conforme à la revendication 18, caractérisée en ce que l'arbre du moteur d'entraînement est attelé au pignon.

20.        Dispositif d'entraînement pour convoyeur par suspension, destiné notamment à l'entraînement de la palangre du dispositif conforme à l'une des revendications 1 à 15, caractérisé en ce qu'il comprend deux tambours (71a, 71b) d'axes sensiblement parallèles, ces tambours étant garnis au moins à leur

-20-

pourtour d'une bande de roulement en élastomère, l'un de ces tambours (71a) étant attelé à un moteur, les deux tambours étant destinés à pincer entre leur bande de roulement le câble (3) du convoyeur, et à entraîner ce dernier par l'adhérence en résultant.

21. Dispositif conforme à la revendication 20, caractérisé en ce que l'un des tambours (71b) est mobile entre une position d'entraînement dans laquelle il est sollicité vers l'autre tambour (71a) et une position dans laquelle il est écarté de l'autre tambour (71a) pour permettre l'engagement du câble (3).

22. Dispositif conforme à l'une des revendications 20 ou 21, caractérisé en ce que le profil de la bande de roulement de l'un au moins des tambours (71a, 71b) est concave.

23. Dispositif conforme à la revendication 1, caractérisé en ce que le défilement de palangre s'opère en va et vient autour d'une poulie de renvoi disposée sur le bateau.

24. Dispositif conforme à la revendication 23, caractérisé en ce que la poulie est entrainée par un moteur muni d'un inverseur.

25. Dispositif conforme à la revendication 23, caractérisé en ce que la poulie est montée folle et qu'il comporte des moyens pour réaliser un déséquilibre sur l'une des branches de la palangre.

26. Dispositif conforme à la revendication 2, caractérisé en ce que la poulie de renvoi (9) est disposée sur un second bateau se déplaçant parallèlement au bateau (2).

**Fig. 1**

**Fig. 2**

**Fig. 3**

**Fig. 4**

**Fig. 5**

**Fig.6** −3−/4

**Fig.7**

**Fig.8**

**Fig.9**

0059677

**Fig.10**

**Fig.11**

**Fig.12**

**Fig.13**

**Fig.14**

# 0059677

**Numéro de la demande**

## Office européen des brevets

## RAPPORT DE RECHERCHE EUROPEENNE

EP 82 44 0007

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| A | US - A - 2 488 451 (URSICH) <br> * En entier * | 1 | A 01 K 79/00 <br> 73/06 |
| A | US - A - 2 741 052 (SHIBUYA) <br> * En entier * | 1 | |
| A | FR - A - 639 261 (HURET) | | |
| A | US - A - 3 722 126 (WHIPPLE) <br> * Colonne 3, lignes 21-45 * | 16 | **DOMAINES TECHNIQUES RECHERCHES (Int. Cl. 3)** <br><br> A 01 K |
| A | US - A - 3 861 651 (TAKAMURA) <br> * Abstract; figures 1-2 * | 20 | |
| A | US - A - 4 165 830 (SVENDSEN) | | |
| A | FR - A - 2 199 439 (PENZA) | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 19-05-1982 | CRUCHTEN |

OEB Form 1503.1 06.78